# EUROPEAN PATENT APPLICATION

(11) **EP 0 952 746 A2**
(43) Date of publication of application: **27.10.1999**
(21) Application number: 99302564.2
(22) Date of filing: 31.03.1999
(51) Int. Cl.: H04Q 7/32

(54) **Telephone set type identifying method and apparatus, data processing apparatus and storage medium**

(30) Priority: 24.04.1998 JP 11550798
(71) Applicant: FUJITSU LIMITED, Kawasaki-shi, Kanagawa 211-8588 (JP)
(72) Inventor: Matsumura, Takahiro, Fujitsu Limited, Kawasaki-shi, Kanagawa 211-8588 (JP)
(74) Representative: Hitching, Peter Matthew

(57) **Abstract**

The telephone set type identifying apparatus is constructed so that a type of a portable telephone set (3) is identified and notified to a data processing apparatus (1), based on a signal which is received from a data interface part (2) of the portable telephone set which is coupled to the data processing apparatus (1) or based on an allocation pattern of input and output terminals of the data interface part (2) of the portable telephone set.

## Description

### BACKGROUND OF THE INVENTION

### 1. Technical Field of the Invention

The present invention generally relates to telephone set identifying methods, telephone set type identifying apparatuses, processing apparatuses and storage mediums, and more particularly to a telephone set identifying method and a telephone set type identifying apparatus for identifying a type of a portable telephone set such as a mobile telephone set and a personal handy-phone system (hereinafter simply referred to as PHS) telephone set which is coupled to a data processing apparatus such as a personal computer and for notifying the identified type to the data processing apparatus, a processing apparatus, and to a computer-readable storage medium which stores a program for causing a computer which couples the data processing apparatus to the portable telephone set to identify the type of the portable telephone set.

In this specification, portable telephones capable of making a communication while moving will be referred to as mobile telephone sets, as opposed to PHS telephone sets which are not suited for making a communication while moving.

### 2. Description of the Related Art

Recently, the use of portable telephone sets such as mobile telephone sets and PHS telephone sets have become popular. With the popular use of the portable telephone sets, it has also become popular to make a data communication using the portable telephone set. However, when viewed from a data processing apparatus such as a personal computer (hereinafter also referred to as PC), a data circuit equipment (DCE) which can be controlled is designed for a connection system and a communication protocol which are completely different depending on the portable telephone set which is coupled to the DCE.

In other words, conventionally, the DCE is designed depending on the type of portable telephone set to which the personal computer is coupled. For this reason, when connecting the mobile telephone set, it is necessary to couple a DCE which is designed for the connection system and the communication protocol of the mobile telephone set the personal computer and the mobile telephone set. On the other hand, when connecting the PHS telephone set, it is necessary to couple a DCE which is designed for the connection system and the communication protocol of the PHS telephone set between the personal computer and the PHS telephone set.

Conventionally, it is thus necessary to design and manufacture the DCE exclusively for each type of portable telephone set. For this reason, there was a problem in that the DCEs cannot be manufactured at a low cost.

In addition, there was another problem in that a troublesome operation is required by the user and that a load on the user is large, because of the need to connect the DCE which is designed exclusively for the type of portable telephone set which is to be coupled to the personal computer, every time a data communication or the like is carried out using the personal computer. More particularly, in a case where the DCE is mounted on a PC card or the like, it was necessary to insert and connect with respect to the personal computer a PC card which is completely different between a case where the mobile telephone set is coupled to the personal computer and a case where the PHS telephone set is coupled to the personal computer.

### SUMMARY OF THE INVENTION

Accordingly, it is a general object of the present invention to provide a novel and useful telephone set identifying method, telephone set type identifying apparatus and recording medium, in which the problems described above are eliminated.

Another and more specific object of the present invention to provide a telephone set identifying method, telephone set type identifying apparatus and recording medium, which are capable automatically identifying the type of portable telephone set which is coupled to the data processing apparatus, so that the user does not need to be aware of the type of portable telephone set being coupled, and to realize an inexpensive DCE by making it possible to use a DCE having the same construction regardless of the type of the portable telephone set and to eliminate the need for a troublesome operation by the user so as to greatly reduce the load on the user.

Still another object of the present invention is to provide a telephone set identifying method for identifying a type of portable telephone set to which a data processing apparatus is coupled, comprising the steps of identifying the type of the portable telephone set based on a response with respect to an operation start signal which is output to a data interface part of the portable telephone set. In this case, it is possible to positively identify the type of the portable telephone set being coupled.

A further object of the present invention is to provide a telephone set identifying method for identifying a type of portable telephone set to which a data processing apparatus is coupled, comprising the steps of identifying the type of the portable telephone set based on a waveform of a signal output from a specific terminal of a data interface part of the portable telephone set. In this case, it is possible to positively identify the type of the portable telephone set immediately when the portable telephone set outputs a synchronizing signal.

Another object of the present invention is to provide a telephone set identifying method for identifying a type of portable telephone set to which a data processing apparatus is coupled, comprising the steps of identifying the type of the portable telephone set based on an allocation pattern of input and output terminals of a data interface part of the portable telephone set. In this case, it is possible to positively identify the type of the portable telephone set immediately when the portable telephone set is coupled.

Still another object of the present invention is to provide a telephone set type identifying apparatus for identifying a type of portable telephone set to which a data processing apparatus is coupled, comprising means for identifying the type of the portable telephone set based on a response with respect to an operation start signal which is output to a data interface part of the portable telephone set. In this case, it is possible to positively identify the type of the portable telephone set being coupled.

A further object of the present invention is to provide a telephone set type identifying apparatus for identifying a type of portable telephone set to which a data processing apparatus is coupled, comprising means for identifying the type of the portable telephone set based on a waveform of a signal output from a specific terminal of a data interface part of the portable telephone set. In this case, it is possible to positively identify the type of the portable telephone set immediately when the portable telephone set outputs a synchronizing signal.

Another object of the present invention is to provide a telephone set type identifying apparatus for identifying a type of portable telephone set to which a data processing apparatus is coupled, comprising means for identifying the type of the portable telephone set based on an allocation pattern of input and output terminals of a data interface part of the portable telephone set. In this case, it is possible to positively identify the type of the portable telephone set immediately when the portable telephone set is coupled.

Each of the telephone set type identifying apparatus described above may be provided within a PC card.

Still another object of the present invention is to provide a computer-readable storage medium which stores a program for causing a computer which couples to a portable telephone set to identify a type of the portable telephone set, comprising means for causing the computer to identify the type of the portable telephone set based on a response with respect to an operation start signal which is output to a data interface part of the portable telephone set. In this case, it is possible to positively identify the type of the portable telephone set being coupled.

A further object of the present invention is to provide a computer-readable storage medium which stores a program for causing a computer which couples to a portable telephone set to identify a type of the portable telephone set, comprising means for causing the computer to identify the type of the portable telephone set based on a pattern of an asynchronous signal output from a data interface part of the portable telephone set. In this case, it is possible to positively identify the type of the portable telephone set immediately when the portable telephone set outputs a control signal.

Another object of the present invention is to provide a computer-readable storage medium which stores a program for causing a computer which couples to a portable telephone set to identify a type of the portable telephone set, comprising means for causing the computer to identify the type of the portable telephone set based on an allocation pattern of input and output terminals of a data interface part of the portable telephone set. In this case, it is possible to positively identify he type of the portable telephone set immediately when the portable telephone set is coupled.

Therefore, according to the present invention, it is possible to automatically identify the type of portable telephone set which is coupled to the data processing apparatus, so that the user does not need to be aware of the type of portable telephone set being coupled, and to realize an inexpensive DCE by making it possible to use a DCE having the same construction regardless of the type of the portable telephone set and to eliminate the need for a troublesome operation by the user so as to greatly reduce the load on the user.

Still another object of the present invention is to provide a processing apparatus operatively coupled between a communication equipment and an information processing apparatus, comprising an identifying part identifying a type of the communication equipment and outputting an identification signal, and a switching part switching a communication protocol prestored for each type of the communication equipment, based on the identification signal.

Other objects and further features of the present invention will be apparent from the following detailed description when read in conjunction with the accompanying drawings.

### BRIEF DESCRIPTION OF THE DRAWINGS

FIG. 1 is a diagram showing the construction of a system applied with a first embodiment of a telephone set identifying method according to the present invention;
FIG. 2 is a perspective view showing the general construction of a personal computer;
FIG. 3 is a system block diagram showing the general construction of a DCE;
FIG. 4 is a system block diagram showing the general construction of a portable telephone set;
FIG. 5 is a diagram showing an allocation pattern of input and output terminals of a connector for a case where the portable telephone set is a mobile telephone set;
FIG. 6 is a diagram showing an allocation pattern of input and output terminals of a connector for a case where the portable telephone set is a PHS telephone set;
FIG. 7 is a diagram showing an important part of a connection part;
FIG. 8 is a flow chart for explaining the operation of a CPU of the DCE in the first embodiment of the telephone set identifying method according to the present invention;
FIG. 9 is a diagram schematically showing a switching of programs in the first embodiment of the telephone set identifying method;
FIG. 10 is a flow chart for explaining the operation of the CPU of the DCE in a second embodiment of the telephone set identifying method according to the present invention;
FIG. 11 is a flow chart for explaining the operation of the CPU of the DCE in a third embodiment of the telephone set identifying method according to the present invention;
FIG. 12 is a diagram showing a synchronizing signal;
FIG. 13 is a flow chart for explaining the operation of the CPU of the DCE in a fourth embodiment of the telephone set identifying method according to the present invention;
FIG. 14 is a flow chart for explaining the operation of the CPU of the DCE in a fifth embodiment of the telephone set identifying method according to the present invention;
FIG. 15 is a diagram showing ground and open-circuit pins allocated to the connector, with respect to the mobile telephone set and the PHS telephone set;
FIGS. 16A and 16B respectively are diagrams showing a frame signal;
FIG. 17 is a flow chart for explaining the operation of the CPU of the DCE in a sixth embodiment of the telephone set identifying method according to the present invention;
FIG. 18 is a diagram showing a notification of the type of portable telephone set identified in the DCE to the personal computer;
FIG. 19 is a diagram for explaining the notification of the type of portable telephone set identified in the DCE to the personal computer;
FIG. 20 is a system block diagram showing the general construction of a main body part of the personal computer which uses an embodiment of a storage medium according to the present invention;
FIG. 21 is a diagram showing a bus interface part shown in FIG. 20; and
FIG. 22 is a diagram showing the general structure of a software architecture of the personal computer.

### DESCRIPTION OF THE PREFERRED EMBODIMENTS

A description will hereinafter be given of embodiments of the present invention, by referring to the drawings.

First, a description will be given of a first embodiment of a telephone set identifying method according to the present invention. This first embodiment of the telephone set identifying method uses a first embodiment of a telephone set type identifying apparatus according to the present invention.

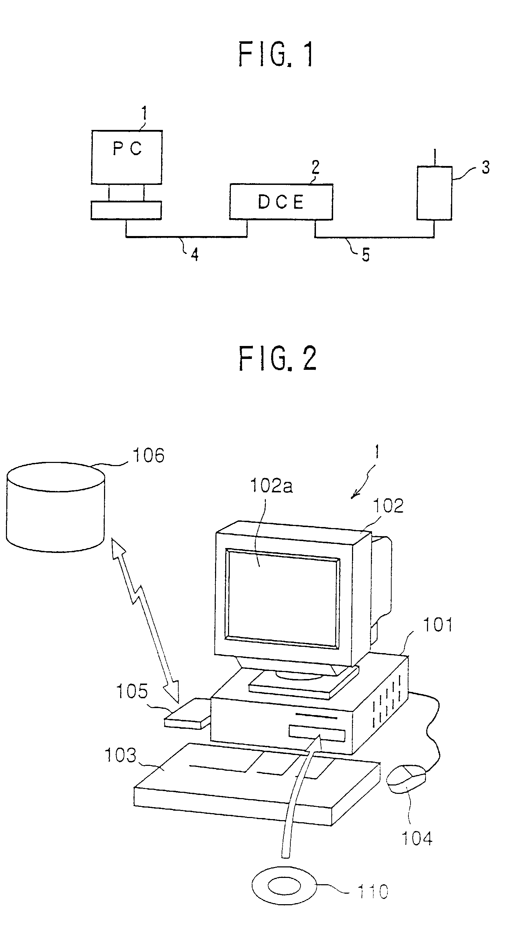

FIG. 1 is a diagram showing the construction of a system which is applied with the first embodiment of the telephone set identifying method. The system shown in FIG. 1 includes a personal computer (or a computer system) 1 which is provided as a data processing apparatus, a DCE 2 which forms the telephone set type identifying apparatus, and a portable telephone set 3. In this embodiment, the DCE 2 is provided as an adapter, and includes a PC card interface and a serial interface such as RS232C.

As shown in FIG. 2, the personal computer 1 generally includes a main body part 101 which includes a central processing unit (CPU), a disk drive unit and the like, a display 102 having a display screen 102a which displays an image in response to an instruction from the main body part 101, a keyboard 103 which is used to input various information to the personal computer 1, a mouse 104 which is used to specify an arbitrary position on the display screen 102a of he display 102, and a modem 105 which downloads an external database or the like via the portable telephone set 3 and the DCE 2 shown in FIG. 1 or, via another line or the like.

A program which is executed by the CPU of the personal computer 1 may be preinstalled in a disk within the disk drive unit or the like. Alternatively, the program may be stored in a portable recording medium such as a disk 110 and be installed therefrom or, the program may be downloaded from another computer or the like using a communication function such as the modem 105.

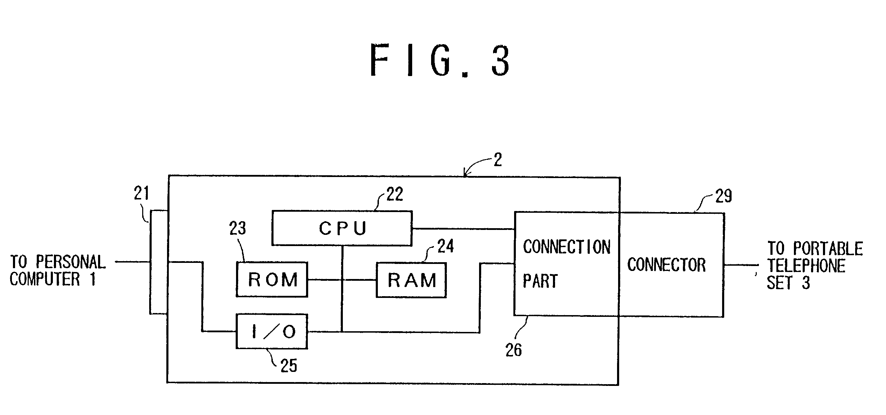

The DCE 2 includes a connector 21, a CPU 22, a ROM 23, a RAM 24, an input and output (I/O) control part 25, a connection part 26, and a 16-pin connector 29 which are connected as shown in FIG. 3. This DCE 2 is built into a PC card which is inserted into a lap-top personal computer or into an adapter which is connected to a desk-top personal computer. For example, the connector 21 is connected via a cable 4 shown in FIG. 1 to RS232C terminals of the main body part 101 of the personal computer 1 which forms a data terminal equipment (DTE) or, is connected directly to a PC card slot of a portable terminal equipment such as the lap-top personal computer. The CPU 22 is provided to control the general operation of the DCE 2, and has a function of controlling a communication protocol of the portable telephone set 3 such as the mobile telephone set and the PHS telephone set. A program which is executed by the CPU 22 is stored in the ROM 23. In addition, the RAM 24 stores various data including intermediate data which are obtained during computation processes carried out by the CPU 22. The I/O control part 25 is provided to control the input to and the output from the DCE 2. The connection part 26 is provided to identify the type of the portable telephone set 3 which is coupled. The connector 29 connects to the portable telephone set 3 via a cable 5 shown in FIG. 1.

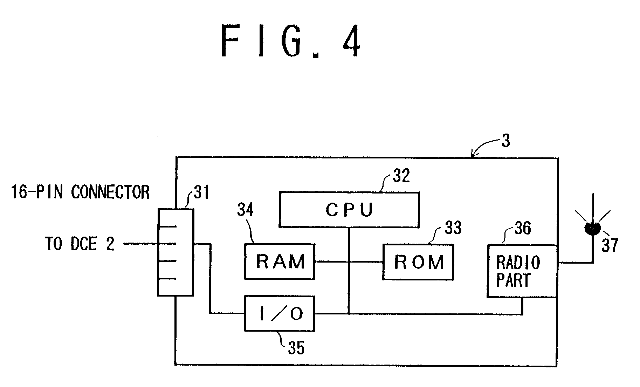

The portable telephone set 3 includes a 16-pin connector 31, a CPU 32, a ROM 33, a RAM 34, an I/O control part 35, a radio transmitter/receiver part 36, and an antenna 37 which are connected as shown in FIG. 4. The CPU 32 is provided to control the general operation of the portable telephone set 3. A program which is executed by the CPU 32 is stored in the ROM 33. In addition, the RAM 34 stores various data including intermediate data obtained during computation processes carried out by the CPU 32. The I/O control part 35 is provided to control the input to and the output from the portable telephone set 3. The radio transmitter/-receiver part 36 has a known construction including a transmitter for making a transmission via the antenna 37 and a receiver for making a reception via the antenna 37.

The basic construction of the portable telephone set 3 shown in FIG. 4 is the same for the mobile telephone set and the PHS telephone set, however, the program executed by the CPU 32 differs depending on the connection system and the communication protocol used. In addition, the construction of the connector 31 forming a data interface part may be the same for the mobile telephone set and the PHS telephone set, but an allocation pattern of input and output terminals of the connector 31 is in general different for the mobile telephone set and the PHS telephone set. A portable telephone set having a known construction, that is, a known mobile telephone set and a known PHS telephone set may be used as the portable telephone set 3, and the construction of the portable telephone set 3 is of course not limited to the construction shown in FIG. 4.

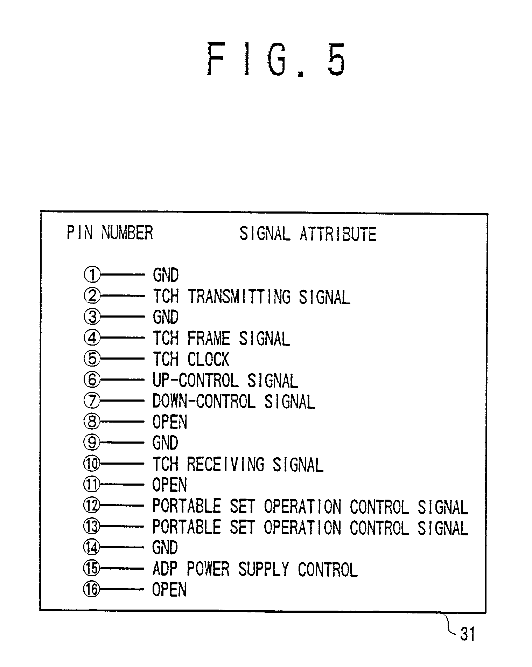

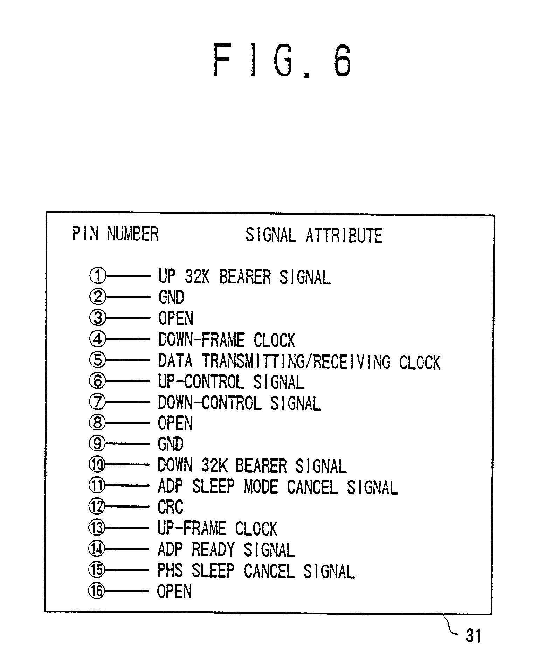

FIG. 5 is a diagram showing an allocation pattern of the input and output terminals of the connector 31 for the case where the portable telephone set 3 is a mobile telephone set. On the other hand, FIG. 6 is a diagram showing an allocation pattern of the input and output terminals of the connector 31 for the case where the portable telephone set 3 is a PHS telephone set. In FIGS. 5 and 6, the pin number of the input and output terminals is indicated on the left side, and the signal attribute corresponding to each pin number is indicated on the right side. In FIGS. 5 and 6, GND indicates the ground, OPEN indicates an open-circuit, TCH indicates an information transmission channel for transferring communication data (real data), ADP indicates an adapter, that is, the DCE 2, and CRC indicates a cyclic redundancy check.

The construction of the connector 31 is of course not limited to the construction shown in FIGS. 5 and 6. In addition, the connector 31 is not limited to the 16-pin connector, and the connector 31 may have an arbitrary number of pins.

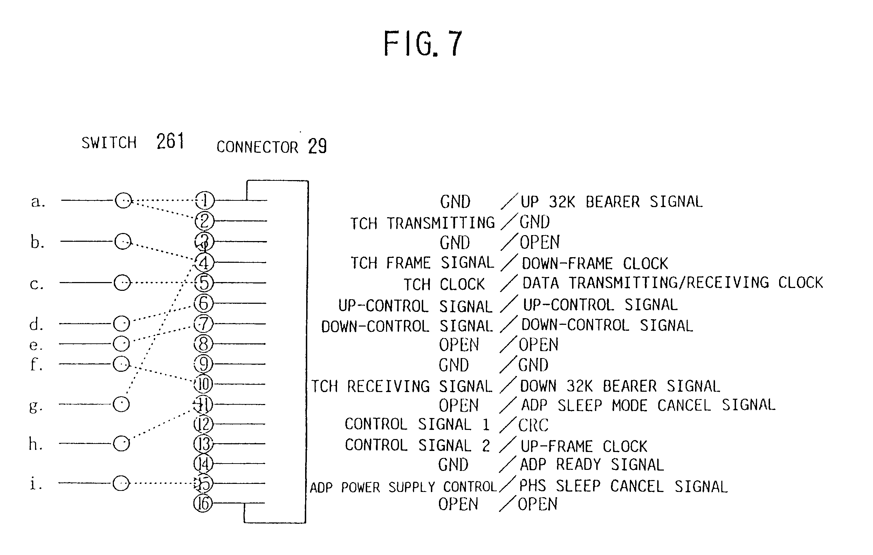

FIG. 7 is a diagram showing an important part of the connection part 26 of this embodiment. In FIG. 7, the numbers assigned to the pins of the connector 29 are the same as the pin numbers assigned to the connector 31 shown in FIGS. 5 and 6. The connection part 26 includes a switch 261 which is connected to ports "a" through "i" of the CPU 22 and connects to the pin numbers "1" through "16" of the connector 29. In this embodiment, the switch 261 is switched by the CPU 22 so that the port "a" connects to the pin number "1" or "2", the port "b" connects to the pin number "4", the port "c" connects to the pin number "5", the port "d" connects to the pin number "6", the port "e" connects to the pin number "7", the port "f" connects to the pin number "10", the port g connects to the pin number "3", the port "h" connects to the pin number "11", and the port "i" connects to the pin number "15". If the portable telephone set 3 being coupled is the PHS telephone set, the port "a" is connected to the pin number "1". On the other hand, the port "a" is connected to the pin number "2" if the portable telephone set 3 being coupled is the mobile telephone set. For example, the switching of the switch 261 may be set by the CPU 22 depending on the type of the portable telephone set 3 used or, may be set fixedly. In FIG. 7, the pin allocation is shown on the right side in correspondence with each of the pin numbers "1" through "16" of the connector 29 for both cases where the portable telephone set 3 is the mobile telephone set and the portable telephone set 3 is the PHS telephone set.

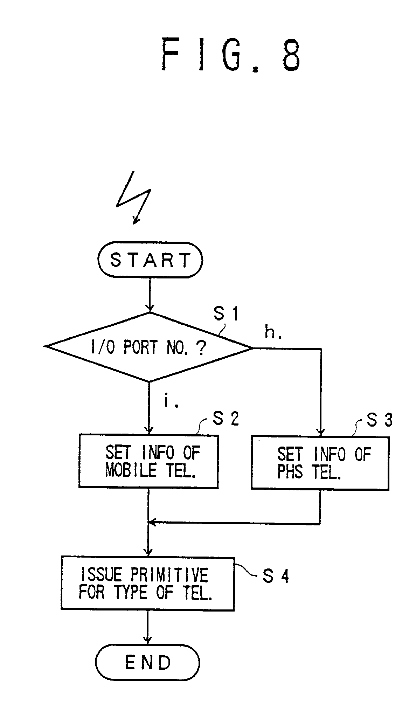

FIG. 8 is a flow chart for explaining the operation of the CPU 22 of the DCE 2 of this embodiment. When an operation start signal from the portable telephone set 3 is input to the port "h" or the port "i" of the CPU 22 to generate an interrupt, the process shown in FIG. 8 is called. In FIG. 8, a step S1 decides whether the operation start signal output from the portable telephone set 3 which is coupled to the DCE 2 is received at the port "h" or the port "i" of the CPU 22 via the connector 31, the cable 5, the connector 29 and the connection part 26. If an ADP power supply control signal is received by the port "i" as the operation start signal, a step Sa sets information which indicates the type of the portable telephone set 3 as the mobile telephone set. On the other hand, if an ADP sleep mode cancel signal is received by the port "h" as the operation start signal, a step S3 sets information which indicates the type of the portable telephone set 3 as the PHS telephone set. After the step S2 or S3, a step S4 issues a telephone set type primitive, so as to notify the identified type of the portable telephone set 3 to the personal computer 1 via the I/O control part 25, the connector 21 and the cable 4, and the process ends.

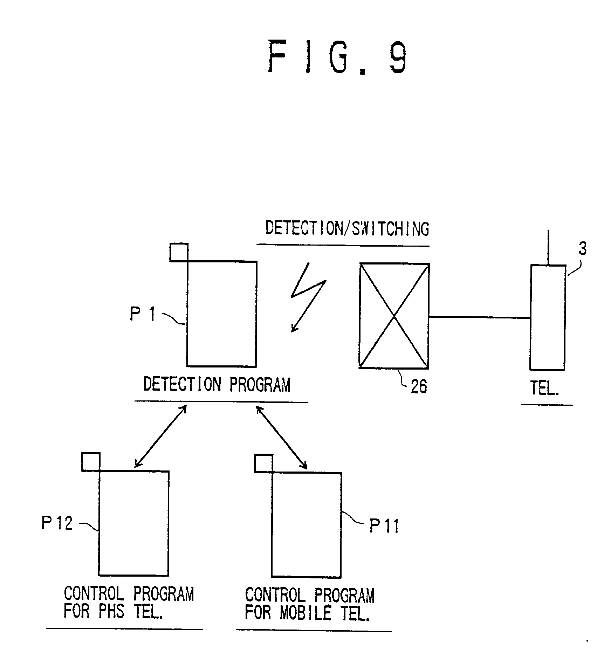

FIG. 9 is a diagram schematically showing the switching of control programs in this embodiment. In FIG. 9, a control (detection) program P1 of the CPU 22 identifies whether the coupled portable telephone set 3 is a mobile telephone set or a PHS telephone set, by carrying out the processes of the steps S1 through S3 shown in FIG. 8. In the case where the portable telephone set 3 is the mobile telephone set as a result of this identification, the control program of the CPU 22 is switched to a control program P11 for the mobile telephone set, and processes including the process of the step S4 shown in FIG. 8 are carried out. On the other hand, in the case where the portable telephone set 3 is the PHS telephone set as a result of this identification, the control program of the CPU 22 is switched to a control program P12 for the PHS telephone set, and processes including the process of the step S4 shown in FIG. 8 are carried out.

The switching of the control program can be made by reading the control program P11 or P12 from a program storage region of the ROM 23. In addition, in a case where it is necessary to switch the hardware connection between the switch 261 and the connector 29 within the connection part 26 of the DCE 2 (that is, switch the hardware connection of an interface between the DCE 2 and the portable telephone set 3) when the control program is switched, a control signal for switching the connection of the switch 261 is output from the CPU 22 before switching the control program. In FIG. 7, the control signal output from the CPU 22 switches the connection of the switch 261 so that the port "a" is switched and connected to the pin number "1" of the connector 29 if the identification result indicates that the portable telephone set 3 is a PHS telephone set. On the other hand, the control signal output from the CPU 22 switches the connection of the switch 261 so that the port "a" is switched and connected to the pin number "2" of the connector 29 if the identification result indicates that the portable telephone set 3 is a mobile telephone set.

Next, a description will be given of a second embodiment of the telephone set identifying method according to the present invention. This second embodiment of the telephone set identifying method uses a second embodiment of the telephone set type identifying apparatus according to the present invention. The construction of the system applied with this second embodiment of the telephone set identifying method is the same as that applied with the first embodiment of the telephone set identifying method described above in conjunction with FIG. 1, and the basic construction of each part of the system in this second embodiment is the same as the basic construction of the corresponding part used in the first embodiment.

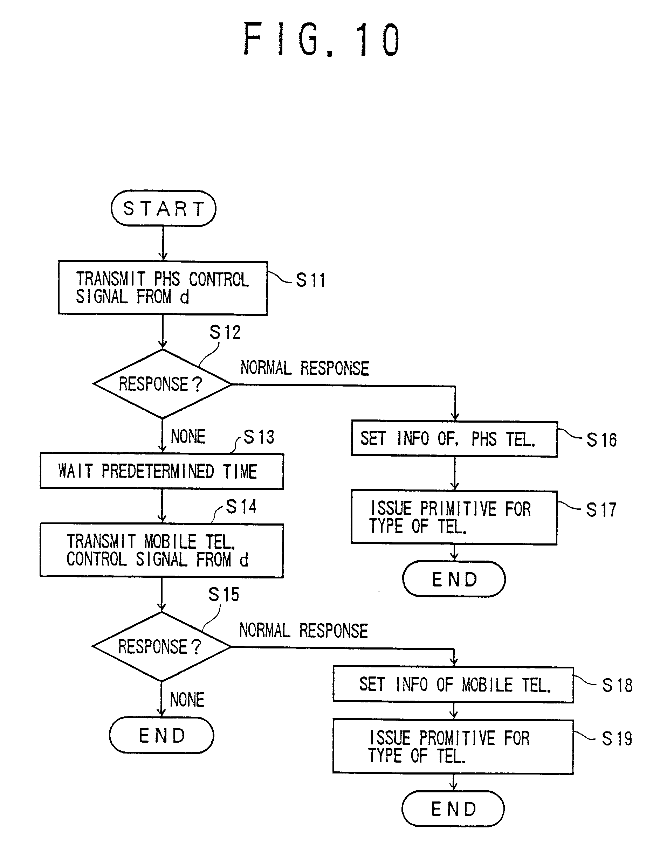

FIG. 10 is a flow chart for explaining the operation of the CPU 22 of the DCE 2 in this second embodiment. In FIG. 10, a step S11 transmits, as an operation start signal, a PHS telephone set control signal which is included in an up-control signal, from the port "d" shown in FIG. 7 via the switch 261 of the connection part 26. As a result, the PHS telephone control signal which is output from the connection part 26 of the DCE 2 via the pin number "6" of the connector 29 is transmitted to the portable telephone set 3 via the cable 5 and the pin number "6" of the connector 31. A step S12 decides whether or not a response is received from the portable telephone set 3 which is a PHS telephone set. For example, the step S12 decides whether or not a response is received from the portable telephone set 3 which is a PHS telephone set, by deciding whether or not a down-control signal from the pin number "7" of the connector 31 of the portable telephone set 3 is received by the port "e" via the cable 5, the pin number "7" of the connector 29 and the switch 261 of the connection part 26.

If no response is received in the step S12, a step S13 waits for a predetermined time. Thereafter, a step S14 transmits, as an operation start signal, a mobile telephone control signal which is included in an up-control signal, from the port "d" via the switch 261 of the connection part 26. Hence, the mobile telephone control signal which is output from the connection part 26 of the DCE 2 via the pin number "6" of the connector 29 is transmitted to the portable telephone set 3 via the cable 5 and the pin number "6" of the connector 31. A step S15 decides whether or not a response is received from the portable telephone set 3 which is a mobile telephone set. For example, the step S15 decides whether or not a response is received from the portable telephone set 3 which is a mobile telephone set, by deciding whether or not a down-control signal from the pin number "7" of the connector 31 of the portable telephone set 3 is received by the port "e" via the cable 5, the pin number "7" of the connector 29 and the switch 261 of the connection part 26. The process ends if no response is received in the step S15.

On the other hand, if a response is received in the step S12, a step S16 sets information which indicates the type of the portable telephone set 3 as the PHS telephone set. After the step S16, a step S17 issues a telephone set type primitive, so as to notify the identified type of the portable telephone set 3 to the personal computer 1 via the I/O control part 25, the connector 21 and the cable 4, and the process ends.

Further, if a response is received in the step S15, a step S18 sets information which indicates the type of the portable telephone set 3 as the mobile telephone set. After the step S18, a step S19 issues a telephone set type primitive, so as to notify the identified type of the portable telephone set 3 to the personal computer 1 via the I/O control part 25, the connector 21 and the cable 4, and the process ends.

Next, a description will be given of a third embodiment of the telephone set identifying method according to the present invention. This third embodiment of the telephone set identifying method uses a third embodiment of the telephone set type identifying apparatus according to the present invention. The construction of the system applied with this third embodiment of the telephone set identifying method is the same as that applied with the first embodiment of the telephone set identifying method described above in conjunction with FIG. 1, and the basic construction of each part of the system in this third embodiment is the same as the basic construction of the corresponding part used in the first embodiment.

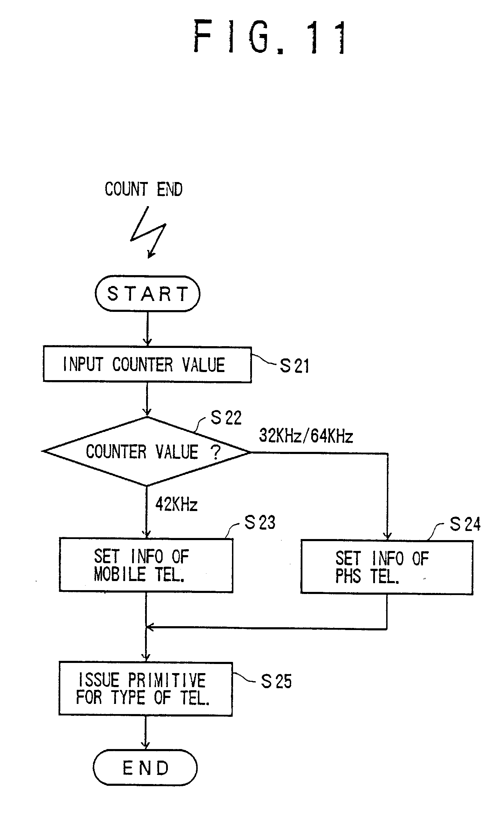

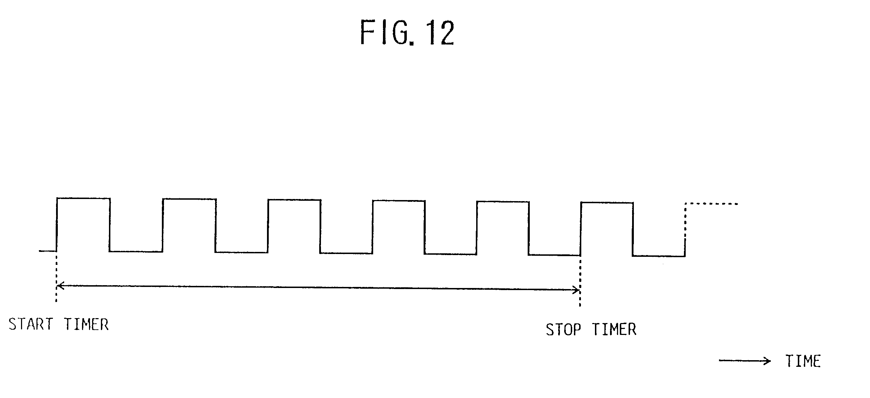

FIG. 11 is a flow chart for explaining the operation of the CPU 22 of the DCE 2 in this third embodiment. The CPU 22 has a function of receiving a synchronizing signal which is output from the portable telephone set 3 which is coupled to the DCE 2 at the port "e" of the CPU 22 via the connector 31, the cable 5, the connector 29 and the connection part 26, and counting the synchronizing signal received at the port "e". For example, this synchronizing signal is a TCH clock having a frequency of 42 kHz in the case where the portable telephone set 3 is a mobile telephone set, and is a data transmitting and receiving clock having a frequency of 32 kHz or 64 kHz in the case where the portable telephone set 3 is a PHS telephone set. As shown in FIG. 12, the CPU 22 counts the number of high levels or low levels of the synchronizing signal for a predetermined time from a timer start time to a timer stop time of the CPU 22, and the process shown in FIG. 11 is called when this counting operation of the CPU 22 ends.

A step S21 inputs a counted value of the synchronizing signal, and a step S22 decides from the input counted value whether the frequency of the counted synchronizing signal matches the frequency (42 kHz) of the mobile telephone set or matches the frequency (32 kHz or 64 kHz) of the PHS telephone set. If the frequency of the synchronizing signal is 42 kHz, a step S23 sets information which indicates the type of the portable telephone set 3 as the mobile telephone set. On the other hand, if the frequency of the synchronizing signal is 32 kHz or 64 kHz, a step S24 sets information which indicates the type of the portable telephone set 3 as the PHS telephone set. After the step S23 or S24, a step S25 issues a telephone set type primitive, so as to notify the identified type of the portable telephone set 3 to the personal computer 1 via the I/O control part 25, the connector 21 and the cable 4, and the process ends.

Next, a description will be given of a fourth embodiment of the telephone set identifying method according to the present invention. This fourth embodiment of the telephone set identifying method uses a fourth embodiment of the telephone set type identifying apparatus according to the present invention. The construction of the system applied with this fourth embodiment of the telephone set identifying method is the same as that applied with the first embodiment of the telephone set identifying method described above in conjunction with FIG. 1, and the basic construction of each part of the system in this fourth embodiment is the same as the basic construction of the corresponding part used in the first embodiment.

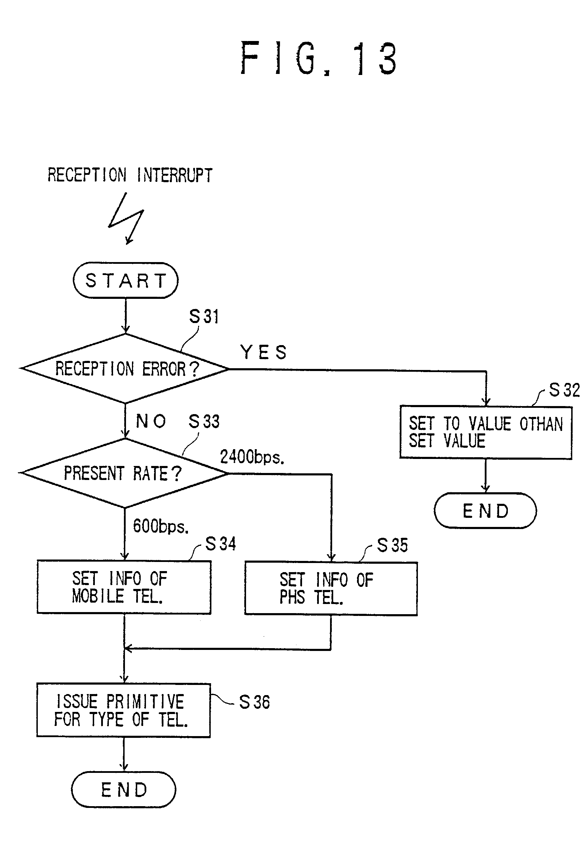

FIG. 13 is a flow chart for explaining the operation of the CPU 22 of the DCE 2 in this fourth embodiment. A down-control signal which is output from the portable telephone set 3 which is coupled to the DCE 2 is received by the port "e" of the CPU 22 via the connector 31, the cable 5, the connector 29 and the connection part 26. The down-control signal includes an asynchronous signal. For example, this asynchronous signal has a bit rate of 600 bps in the case where the coupled portable telephone set 3 is a mobile telephone set, and has a bit rate of 2400 bps in the case where the coupled portable telephone set 3 is a PHS telephone set. For the sake of convenience, it is assumed that the CPU 2 is set to receive the asynchronous signal of 600 bps in the initial state. The process shown in FIG. 13 is called when a reception interrupt is generated from the portable telephone set 3.

A step S31 decides whether or not a reception error is generated in a state where the CPU 22 is set to receive the asynchronous signal of 600 bps. If the decision result in the step S31 is YES, a step S32 switches the setting of the CPU 22 to receive the asynchronous signal of 2400 bps, and the process ends. As a result, when the reception interrupt is generated, the step S31 this time decides whether or not a reception error is generated in a state where the CPU 22 is set to receive the asynchronous signal of 2400 bps.

On the other hand, if the decision result in the step S31 becomes NO, a step S33 decides whether the bit rate of the asynchronous signal presently being received is 600 bps or 2400 bps. If the bit rate of the asynchronous signal being received is 600 bps, a step S34 sets information which indicates the type of the portable telephone set 3 as the mobile telephone set. If the bit rate of the asynchronous signal being received is 2400 bps, a step S35 sets information which indicates the type of the portable telephone set 3 as the PHS telephone set. After the step S34 or S35, a step S36 issues a telephone set type primitive, so as to notify the identified type of the portable telephone set 3 to the personal computer 1 via the I/O control part 25, the connector 21 and the cable 4, and the process ends.

Next, a description will be given of a fifth embodiment of the telephone set identifying method according to the present invention. This fifth embodiment of the telephone set identifying method uses a fifth embodiment of the telephone set type identifying apparatus according to the present invention. The construction of the system applied with this fifth embodiment of the telephone set identifying method is the same as that applied with the first embodiment of the telephone set identifying method described above in conjunction with FIG. 1, and the basic construction of each part of the system in this fifth embodiment is the same as the basic construction of the corresponding part used in the first embodiment.

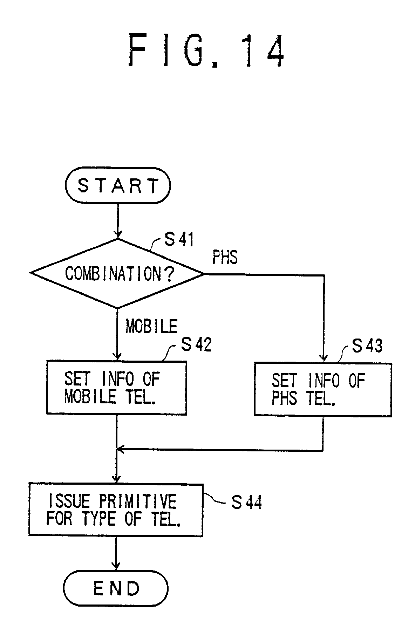

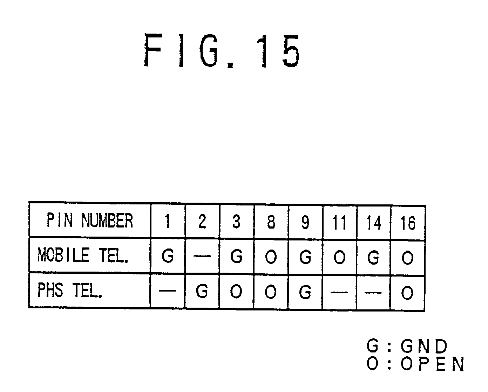

FIG. 14 is a flow chart for explaining the operation of the CPU 22 of the DCE 2 in this fifth embodiment. As described above in conjunction with FIGS. 5 through 7, the ground pins and the open pins allocated to the connectors 31 and 29 are different for the case where the coupled portable telephone set 3 is a mobile telephone set and the case where the coupled portable telephone set 3 is a PHS telephone set. FIG. 15 is a diagram showing the ground pins and the open pins allocated to the connector 29, with respect to the mobile telephone set and the PHS telephone set. In FIG. 15, "G" denotes the ground, "O" denotes the open-circuit, and "-" indicates neither the ground nor the open-circuit. In this embodiment, the combination of the pin numbers of the ground pins of the connector 29 detected by the CPU 22 is compared with the combinations shown FIG. 15, so as to determine whether the coupled portable telephone set 3 is a mobile telephone set or a PHS telephone set.

A step S41 decides whether the coupled portable telephone set 3 is a mobile telephone set or a PHS telephone set, by comparing the combination of the pin numbers of the ground pins of the connector 29 detected by the CPU 22 with the combinations shown in FIG. 15. For example, if the combination of the pin numbers of the ground pins of the connector 29 detected by the CPU 22 is "1", "3", "9" and "14", it is judged that the coupled portable telephone set 3 is a mobile telephone set. If the step S41 decides that the coupled portable telephone set 3 is a mobile telephone set, a step S42 sets information which indicates the type of the portable telephone set 3 as the mobile telephone set. On the other hand, if the step S41 decides that the coupled portable telephone set 3 is a PHS telephone set, a step S43 sets information which indicates the type of the portable telephone set 3 as the PHS telephone set. After the step S42 or S43, a step S44 issues a telephone set type primitive, so as to notify the identified type of the portable telephone set 3 to the personal computer 1 via the I/O control part 25, the connector 21 and the cable 4, and the process ends.

Next, a description will be given of a sixth embodiment of the telephone set identifying method according to the present invention. This sixth embodiment of the telephone set identifying method uses a sixth embodiment of the telephone set type identifying apparatus according to the present invention. The construction of the system applied with this sixth embodiment of the telephone set identifying method is the same as that applied with the first embodiment of the telephone set identifying method described above in conjunction with FIG. 1, and the basic construction of each part of the system in this sixth embodiment is the same as the basic construction of the corresponding part used in the first embodiment.

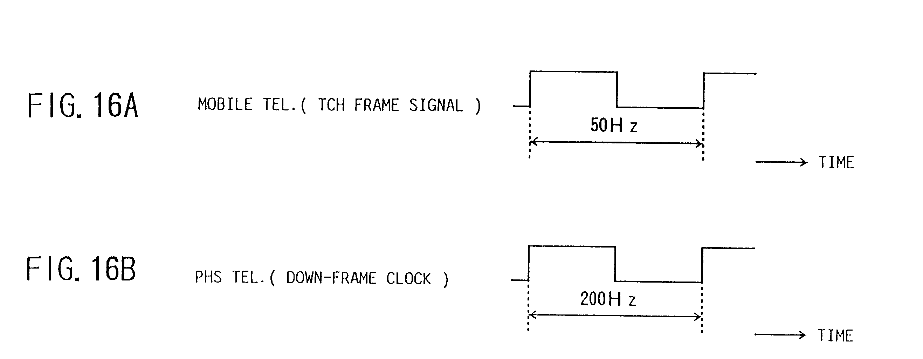

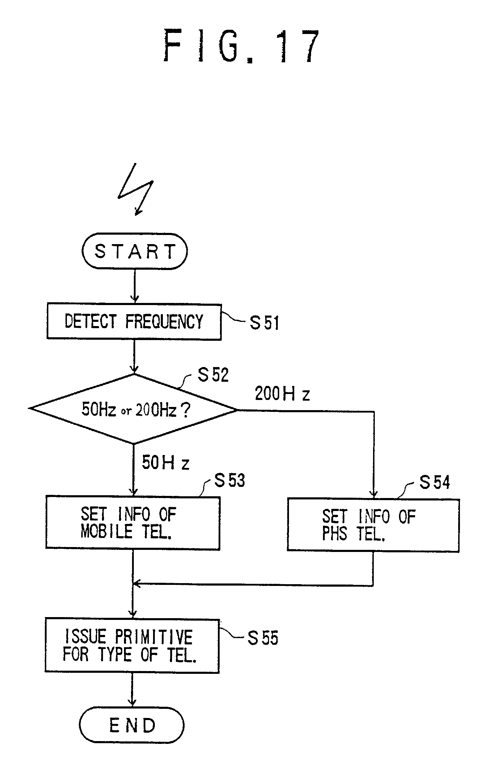

FIG. 17 is a flow chart for explaining the operation of the CPU 22 of the DCE 2 in this sixth embodiment. As shown in FIGS. 16A and 16B, the frequency of a frame signal used in the portable telephone set 3 is different between the mobile telephone set and the PHS telephone set. FIG. 16A shows a TCH frame signal having a frequency of 50 Hz which is used as the frame signal in the mobile telephone set, and FIG. 16B shows a down-frame clock having a frequency of 200 Hz which is used as the frame signal in the PHS telephone set. In this embodiment, the CPU 22 detects the frequency of the frame signal received from the portable telephone set 3, so as to judge whether the coupled portable telephone set 3 is a mobile telephone set or a PHS telephone set.

The frame signal which is output from the portable telephone set 3 which is coupled to the DCE 2, is received at the port "b" of the CPU 22 via the connector 31, the cable 5, the connector 29 and the connection part 26. A step S51 detects the frequency of the frame signal received at the port "b". A step S52 decides whether the detected frequency of the frame signal is 50 Hz corresponding to the mobile telephone set or 200 Hz corresponding to the PHS telephone set. If the frequency of the frame signal detected in the step S52 is 50 Hz, the received frame signal is a TCH frame signal from a mobile telephone set, and it is judged that the coupled portable telephone set 3 is the mobile telephone set. In this case, a step S53 sets information which indicates the type of the portable telephone set 3 as the mobile telephone set. On the other hand, if the frequency of the frame signal detected in the step S52 is 200 Hz corresponding to the PHS telephone set, the received frame signal is a down-frame clock from a PHS telephone set, and it is judged that the coupled portable telephone set 3 is the PHS telephone set. In this case, a step S54 sets information which indicates the type of the portable telephone set 3 as the PHS telephone set. After the step S53 or S54, a step S55 issues a telephone set type primitive, so as to notify the identified type of the portable telephone set 3 to the personal computer 1 via the I/O control part 25, the connector 21 and the cable 4, and the process ends.

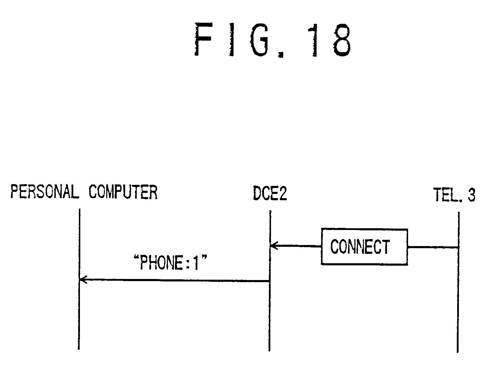

In each of the embodiments described above, the type of the portable telephone set 3 identified by the DCE 2 can be notified using a serial line coupled to the personal computer 1, by use of the cable 4. FIG. 18 is a diagram showing the notification of the type of the portable telephone set 3 identified by the DCE 2 to the personal computer 1. In FIG. 18, when the portable telephone set 3 is coupled to the DCE 2 and the DCE 2 identifies the type of the portable telephone set 3, a character indication "PHONE: 1", for example, is output to the serial line so as to notify the identified type of the portable telephone set 3 to the personal computer 1. Accordingly, at the personal computer 1, it is possible to know the type of the coupled portable telephone set 3 from the notified character indication. For example, the personal computer 1 can carry out processes, such as making a communication process between a communication application in a higher level or layer, by switching a communication controlling software which controls the communication depending on the type of the portable telephone set 3.

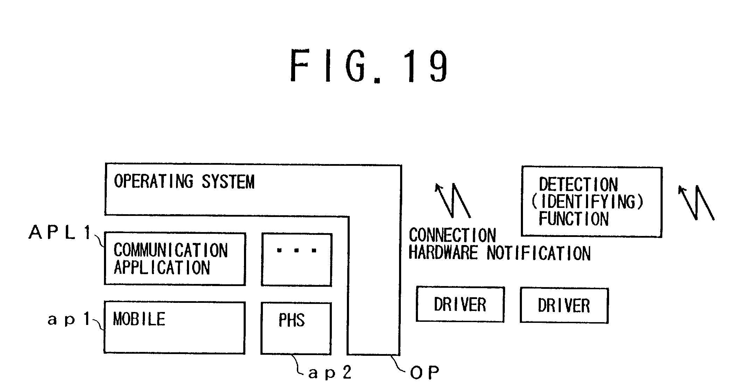

In other words, when the personal computer 1 is notified of the type of the portable telephone set 3 identified by the DCE 2 in FIG. 19, an operating system OP1 of the personal computer 1 can know the type of the portable telephone set 3 which is coupled to the personal computer 1 via the DCE 2. In a case where the type of the portable telephone set 3 is the mobile telephone set, the communication controlling software which controls the communication depending on the type of the portable telephone set 3 is switched to a communication controlling application ap1. On the other hand, in a case where the type of the portable telephone set 3 is the PHS telephone set, the communication controlling software which controls the communication depending on the type of the portable telephone set 3 is switched to a communication controlling application ap2. Accordingly, at the personal computer 1, it is possible to carry out processes such as making a communication process between the communication controlling application apl or ap2 depending on the type of the coupled portable telephone set 3 and a communication application APL1 in a higher level or layer.

Next, a description will be given of an embodiment of a computer-readable storage medium according to the present invention. In each of the embodiments described above, the DCE 2 is provided independently of the personal computer 1. However, the functions of the DCE 2 may be provided within the personal computer 1. In this case, the DCE 2 is mounted on a PC card or the like, and the DCE 2 may be detachably provided with respect to the main body part 101 of the personal computer 1 or, the DCE 2 may be fixedly provided in the main body part 101 of the personal computer 1. On the other hand, the functions of the DCE 2 may be realized by the CPU within the personal computer 1. Accordingly, this embodiment of the storage medium may be formed by a storage medium which stores a program which is executed by the CPU 22 within the DCE 2 or, a storage medium which stores a program which is executed by the CPU which is provided within the personal computer 1 and realizes the functions of the DCE 2. In the following description, it is assumed for the sake of convenience that the storage medium stores a program which is executed by the CPU which is provided within the personal computer 1 and realizes the functions of the DCE 2.

The storage medium is not limited to a portable storage medium such as integrated circuit (IC) card memories, floppy disks, magneto-optical disks and CD-ROMs, and includes storage mediums which are accessible by a computer system which is coupled via a communication means or a communication unit such as a modem, LAN and the like.

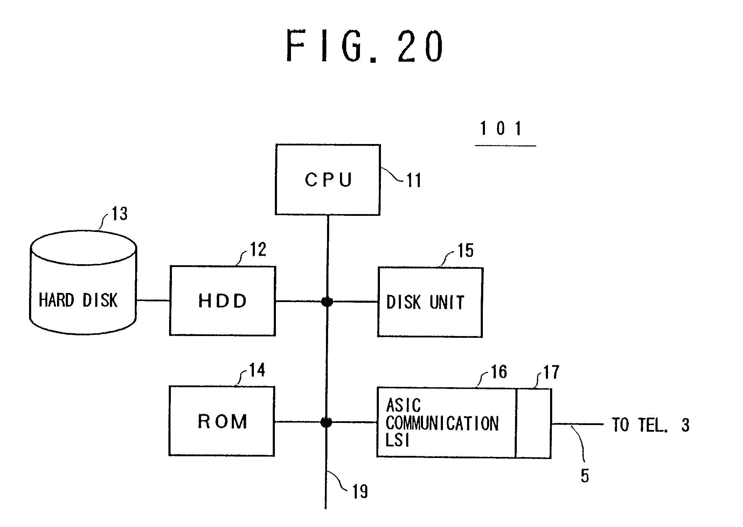

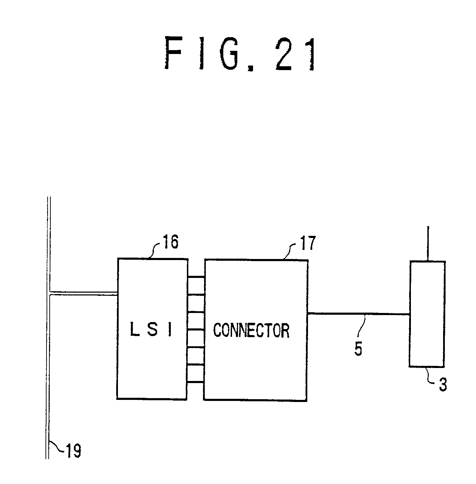

FIG. 20 is a system block diagram showing the general construction of the main body part 101 of the personal computer 1 which uses this embodiment of the storage medium. The personal computer 101 includes a CPU 11, a hard disk drive (HDD) 12, a ROM 14, a disk unit 15 and an ASIC communication LSI 16 which are coupled via a bus 19 as shown in FIG. 20, and a hard disk 13 which is driven by the HDD 12. A connector 17 which corresponds to the connector 29 is connected to the communication LSI 16. As shown in FIG. 21, this connector 17 is coupled to the connector 31 of the portable telephone set 3 via the cable 5. The communication LSI 16 includes a communication function (asynchronous serial control and synchronous serial control) of the personal computer 101, and a function of controlling the I/O ports. The communication LSI 16 forms a PCI or an ISA bus interface, for example, with respect to the bus 19 of the personal computer 1.

For example, this embodiment of the storage medium is formed by the disk 110 shown in FIG. 2, and stores a program for realizing one of the first through sixth embodiments of the telephone set identifying method described above or, an arbitrary combination of the first through sixth embodiments of the telephone set identifying method described above. The program which is read from the disk 110 by the disk unit 15 is installed, for example, in the hard disk 13 via the HDD 12, under the control of the CPU 11. Hence, the CPU 11 carries out one of or an arbitrary combination of the processes described above in conjunction with FIGS. 8, 10, 11, 13, 14 and 17, so as to identify the type of the portable telephone set 3 which is coupled to the personal computer 1. In this case, the type of the portable telephone set 3 is identified within the personal computer 1, and thus, in this embodiment, the step of notifying the identified type of the portable telephone set 3 to the personal computer 1 in each of the first through sixth embodiments notifies the identified type to an operating system or an application having a higher level or layer.

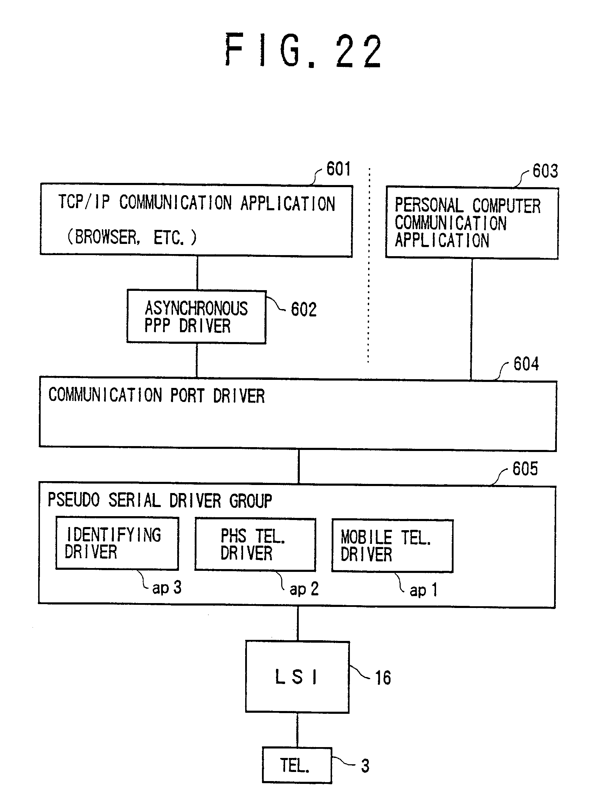

FIG. 22 is a diagram showing the general structure of a software architecture of the personal computer 1. Various applications and drivers shown in FIG. 22 are provided under the operating system OP shown in FIG. 19. A personal computer communication application 603, an asynchronous PPP driver 602 and a TCP/IP communication application 601 such as a browser, are respectively provided as application in the higher level or layer, with respect to a communication port driver 604, and carry out various kinds of communication control. The communication port driver 604 is provided as an application in a higher level or layer, with respect to a pseudo serial driver group 605, and carries out various kinds of port driver control. The pseudo serial driver group 605 includes a communication controlling application (mobile telephone driver) apl which controls the communication for a mobile telephone set when the coupled portable telephone set 3 is the mobile telephone set, a communication controlling application (PHS telephone driver) ap2 which controls the communication for a PHS telephone set when the coupled portable telephone set 3 is the PHS telephone set, and an identifying application (identification driver) ap3 which identifies the type of the coupled portable telephone set 3. The program stored in this embodiment of the storage medium includes at least the identifying application (identification driver) ap3. The pseudo serial driver group 605 can communicate with the portable telephone set 3 via the communication LSI 16 shown in FIG. 21.

Therefore, this embodiment of the storage medium can provide a driver such as the identifying application (identification driver) ap3, with respect to an application in the higher level or layer such as the communication port driver 604.

It is conceivable to construct a DCE apparatus which is provided with both a DCE designed exclusively for the mobile telephone set and a DCE designed exclusively for the PHS telephone set. But in this case, the hardware construction becomes complex, and it becomes difficult to reduce both the size and cost of the DCE apparatus. On the other hand, according to the present invention, the hardware used is the same regardless of the type of the portable telephone set, and the required process with respect to the mobile telephone set or the PHS telephone set is carried out by automatically identifying the type of the portable telephone set and switching the software. For this reason, the present invention does not require a complex hardware, and it is possible to easily reduce both the size and the cost of the telephone set type identifying apparatus.

In addition, the shape of the connector used in the conventional portable telephone set is different depending on the type of the portable telephone set, in order to prevent the user from making an erroneous connection. Hence, although the number of pins used are the same for the connectors, connectors having various different shapes had to be manufactured and used for the corresponding types of portable telephone sets. However, if it is possible to use connectors having the same shape regardless of the types of portable telephone sets, it would substantially simplify matters and also considerably reduce the cost of the connectors. In the present invention, it is possible to automatically identify and recognize within the DCE or within the personal computer, the type of the portable telephone set which is coupled to the DCE, and thus, the user does not need to be aware of the type of the portable telephone set which is to be coupled to the DCE. Therefore, no inconveniences are introduced in the present invention even if connectors having the same shape are used regardless of the type of the portable telephone sets.

Further, the present invention is not limited to these embodiments, but various variations and modifications may be made without departing from the scope of the present invention.

## Claims

1. A telephone set identifying method for identifying a type of portable telephone set to which a data processing apparatus is coupled, characterized by the steps of:
identifying the type of the portable telephone set based on a response with respect to an operation start signal which is output to a data interface part of the portable telephone set.

2. A telephone set identifying method for identifying a type of portable telephone set to which a data processing apparatus is coupled, characterized by the steps of:
identifying the type of the portable telephone set based on a waveform of a signal output from a specific terminal of a data interface part of the portable telephone set.

3. A telephone set identifying method for identifying a type of portable telephone set to which a data processing apparatus is coupled, characterized by the steps of:
identifying the type of the portable telephone set based on an allocation pattern of input and output terminals of a data interface part of the portable telephone set.

4. A telephone set type identifying apparatus for identifying a type of portable telephone set to which a data processing apparatus is coupled, characterized by:
means for identifying the type of the portable telephone set based on a response with respect to an operation start signal which is output to a data interface part of the portable telephone set.

5. A telephone set type identifying apparatus for identifying a type of portable telephone set to which a data processing apparatus is coupled, characterized by:
means for identifying the type of the portable telephone set based on a waveform of a signal output from a specific terminal of a data interface part of the portable telephone set.

6. A telephone set type identifying apparatus for identifying a type of portable telephone set to which a data processing apparatus is coupled, characterized by:
means for identifying the type of the portable telephone set based on an allocation pattern of input and output terminals of a data interface part of the portable telephone set.

7. A PC card which is provided with the telephone set type identifying apparatus according to any of claims 4 to 6.

8. A computer-readable storage medium which stores a program for causing a computer which couples to a portable telephone set to identify a type of the portable telephone set, characterized by:
means for causing the computer to identify the type of the portable telephone set based on a response with respect to an operation start signal which is output to a data interface part of the portable telephone set.

9. A computer-readable storage medium which stores a program for causing a computer which couples to a portable telephone set to identify a type of the portable telephone set, characterized by:
means for causing the computer to identify the type of the portable telephone set based on a pattern of an asynchronous signal output from a data interface part of the portable telephone set.

10. A computer-readable storage medium which stores a program for causing a computer which couples to a portable telephone set to identify a type of the portable telephone set, characterized by:
means for causing the computer to identify the type of the portable telephone set based on an allocation pattern of input and output terminals of a data interface part of the portable telephone set.

11. A processing apparatus operatively coupled between a telephone set and an information processing apparatus, characterized by:
an identifying part identifying a type of the telephone set and outputting an identification signal; and
a switching part switching a communication protocol prestored for each type of the telephone set, based on the identification signal.

12. The processing apparatus as claimed in claim 11, characterized in that the telephone set is a mobile telephone set capable of making a communication while moving or a personal handy-phone system telephone set unsuited for making a communication while moving.
